(19) Europäisches Patentamt / European Patent Office / Office européen des brevets

(11) **EP 4 307 219 A1**

(12) **EUROPEAN PATENT APPLICATION**
published in accordance with Art. 153(4) EPC

(43) Date of publication:
**17.01.2024 Bulletin 2024/03**

(21) Application number: **22778597.9**

(22) Date of filing: **17.03.2022**

(51) International Patent Classification (IPC):
**G06T 7/00** (2017.01)

(52) Cooperative Patent Classification (CPC):
**G06N 3/04; G06N 3/08; G06T 7/00; G06T 7/11; G06T 7/73**

(86) International application number:
**PCT/CN2022/081503**

(87) International publication number:
**WO 2022/206414 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.03.2021 CN 202110334527**

(71) Applicant: **Huawei Technologies Co., Ltd.**
**Longgang**
**Shenzhen, Guangdong 518129 (CN)**

(72) Inventor: **SU, Peng**
**Shenzhen, Guangdong 518129 (CN)**

(74) Representative: **MERH-IP Matias Erny Reichl Hoffmann**
**Patentanwälte PartG mbB**
**Paul-Heyse-Strasse 29**
**80336 München (DE)**

(54) **THREE-DIMENSIONAL TARGET DETECTION METHOD AND APPARATUS**

(57) This application relates to the field of computer vision technologies, specifically includes a three-dimensional target detection method and apparatus, and may be applied to the fields such as intelligent transportation, intelligent driving, and mapping. The method includes: obtaining an image and point cloud data of a target environment; obtaining semantic information of the image, where the semantic information includes category information corresponding to pixels in the image; and determining three-dimensional location information of a target in the target environment based on the point cloud data, the image, and the semantic information of the image. The method improves accuracy and precision of three-dimensional location detection of a target object in the target environment.

FIG. 1

EP 4 307 219 A1

## Description

This application claims priority to Chinese Patent Application No. 202110334527.8, filed with the China National Intellectual Property Administration on March 29, 2021 and entitled "THREE-DIMENSIONAL TARGET DETECTION METHOD AND APPARATUS", which is incorporated herein by reference in its entirety.

## TECHNICAL FIELD

This application relates to the field of computer vision technologies, and in particular, to a three-dimensional target detection method and apparatus.

## BACKGROUND

Three-dimensional target detection is a key technology in the field of autonomous driving technologies. A task of three-dimensional target detection is to determine a location of a target (for example, a vehicle, a pedestrian, or a road facility) in three-dimensional space based on sensor data. Accurate determining of the location of the target in the three-dimensional space is foundation for an autonomous driving vehicle to sense a surrounding environment, which is also crucial to safe autonomous driving.

A three-dimensional target detection method in prior art is mainly based on point cloud data obtained by a LIDAR (LIDAR). The LIDAR is a sensor commonly used to obtain data in a surrounding environment in the autonomous driving solution. The point cloud data has an advantage of accurate three-dimensional coordinate information, but has low resolution, especially in a scenario with a long-distance target and a sparse point cloud. Therefore, a three-dimensional target detection algorithm based on the point cloud data has low detection precision in the scenario with a long-distance target and a sparse point cloud.

Therefore, a three-dimensional target detection manner with high detection precision is urgently needed.

## SUMMARY

This application provides a three-dimensional target detection method, to resolve low detection accuracy in a related technology. This application further provides a corresponding apparatus, a device, a computer-readable storage medium, and a computer program product.

According to a first aspect, an embodiment of this application provides a three-dimensional target detection method. According to the method, three-dimensional location information of a target object in a target environment can be recognized based on two-dimensional image information and three-dimensional point cloud data. Advantages of high resolution, a long visual distance, and rich semantic information of an image are combined with advantages of accurate three-dimensional information of point cloud data, to greatly improve accuracy and precision of object detection. In addition, in a process of determining three-dimensional location information of a target in the target environment, semantic information of an image may be obtained, and then the three-dimensional location information of the target is determined with reference to point cloud data, the image, and the semantic information. In this manner, the semantic information of the image can be enhanced during three-dimensional target detection, to improve precision of three-dimensional target detection.

Specifically, an image and point cloud data of a target environment are first obtained. Then, semantic information of the image is obtained, where the semantic information includes category information corresponding to pixels in the image. Finally, three-dimensional location information of a target in the target environment is determined based on the point cloud data, the image, and the semantic information of the image.

Optionally, in an embodiment of this application, that three-dimensional location information of a target in the target environment is determined based on the point cloud data, the image, and the semantic information of the image includes:

　　　　projecting the image and the semantic information of the image to the point cloud data, to generate semantic point cloud data;
　　　　extracting feature information of the semantic point cloud data, to generate semantic point cloud feature information; and
　　　　determining the three-dimensional location information of the target in the semantic point cloud data based on the semantic point cloud feature information.

In this embodiment, semantic point cloud feature extraction and target detection are separately completed in two steps, to reduce complexity of three-dimensional target detection.

Optionally, in an embodiment of this application, the semantic point cloud feature information is output by using a semantic point cloud feature recognition network, and the three-dimensional location information is output by using a target detection network.

In this embodiment, the semantic point cloud feature information and the three-dimensional location information of the target in the semantic point cloud data are separately obtained by using a neural network, to improve efficiency and accuracy of obtaining the three-dimensional location information of the target in the semantic point cloud data.

Optionally, in an embodiment of this application, the semantic point cloud feature recognition network includes a point cloud feature recognition subnetwork and an image feature recognition subnetwork.

The point cloud feature recognition subnetwork is used to extract point cloud feature information of the point cloud data.

The image feature recognition subnetwork is used to extract image feature information of the image based on the image and the semantic information, and dynamically adjust a network parameter of the point cloud feature recognition subnetwork based on the image feature information.

In this embodiment, a feature of the point cloud data and a feature of the image are fused in the point cloud feature recognition subnetwork 901, to improve detection precision of the point cloud feature recognition subnetwork 901.

Optionally, in an embodiment of this application, the point cloud feature recognition subnetwork includes at least one network layer, and the image feature recognition subnetwork is separately connected to the at least one network layer.

The image feature recognition subnetwork is specifically used to extract the image feature information of the image based on the image and the semantic information, and separately and dynamically adjust a network parameter of the at least one network layer based on the image feature information.

According to this embodiment, as the image feature information increases with a quantity of network layers, influence of the image feature information on point cloud feature extraction may be gradually enhanced.

Optionally, in an embodiment of this application, the network parameter includes a convolution kernel parameter and/or an attention mechanism parameter, and the attention mechanism parameter is used to use information that is in the image feature information and whose correlation with the point cloud data is greater than a correlation threshold as valid information for adjusting the point cloud feature recognition subnetwork.

According to this embodiment, information that is in the image feature information and whose correlation with the point cloud data is high may be used to adjust the network parameter of the point cloud feature recognition subnetwork 901 by using an attention mechanism.

Optionally, in an embodiment of this application, the method further includes:

separately obtaining output data of the at least one network layer; and
determining, based on the output data, adjustment effect data corresponding to the network parameter.

According to this embodiment, an output result at each network layer may be obtained, to obtain a contribution degree of the image feature information to each network layer.

Optionally, in an embodiment of this application, the semantic point cloud feature recognition network and the target detection network are obtained through training in the following manner:

obtaining a plurality of semantic point cloud training samples, where the semantic point cloud training samples include a point cloud data sample, an image sample projected to the point cloud data sample, and the semantic information of the image sample, and the three-dimensional location information of the target is labeled in the semantic point cloud training sample;
constructing the semantic point cloud feature recognition network and the target detection network, where an output end of the semantic point cloud feature recognition network is connected to an input end of the target detection network;
separately inputting the plurality of semantic point cloud training samples to the semantic point cloud feature recognition network, and outputting a prediction result by using the target detection network; and
performing iterative adjustment on network parameters of the semantic point cloud feature recognition network and the target detection network based on a difference between the prediction result and the labeled three-dimensional location information of the target, until iteration meets a preset requirement.

According to this embodiment, the semantic point cloud feature recognition network and the target detection network can be jointly optimized, to improve network learning efficiency and model precision.

Optionally, in an embodiment of this application, that semantic information of the image is obtained includes: performing panoramic segmentation on the image, to generate the semantic information of the image, where the semantic information includes a panoramic segmentation image of the image, and the panoramic segmentation image includes image regions, obtained through panoramic segmentation, of different objects and category information corresponding to the image regions.

According to this embodiment, information about a category to which each pixel in the image belongs may be obtained by using a panoramic segmentation algorithm.

Optionally, in an embodiment of this application, the image includes a panoramic image.

According to this embodiment, the panoramic image may include information about the target environment at a plurality of angles, to enrich information such as a three-dimensional feature of the image.

According to a second aspect, an embodiment of this application provides a three-dimensional target detection apparatus. The apparatus includes:

a communication module, configured to obtain an image and point cloud data of a target environment;
a semantic extraction module, configured to obtain semantic information of the image, where the semantic information includes category information corresponding to pixels in the image; and
a target detection module, configured to determine three-dimensional location information of a target in the target environment based on the point cloud data, the image, and the semantic information of the image.

Optionally, in an embodiment of this application, the target detection module 1005 is specifically configured to:

project the image and the semantic information of the image to the point cloud data, to generate semantic point cloud data;
extract feature information of the semantic point cloud data, to generate semantic point cloud feature information; and
determine the three-dimensional location information of the target in the semantic point cloud data based on the semantic point cloud feature information.

Optionally, in an embodiment of this application, the semantic point cloud feature information is output by using a semantic point cloud feature recognition network, and the three-dimensional location information is output by using a target detection network.

Optionally, in an embodiment of this application, the semantic point cloud feature recognition network includes a point cloud feature recognition subnetwork and an image feature recognition subnetwork.

The point cloud feature recognition subnetwork is used to extract point cloud feature information of the point cloud data.

The image feature recognition subnetwork is used to extract image feature information of the image based on the image and the semantic information, and dynamically adjust a network parameter of the point cloud feature recognition subnetwork based on the image feature information.

Optionally, in an embodiment of this application, the point cloud feature recognition subnetwork includes at least one network layer, and the image feature recognition subnetwork is separately connected to the at least one network layer.

The image feature recognition subnetwork is specifically used to extract the image feature information of the image based on the image and the semantic information, and separately and dynamically adjust a network parameter of the at least one network layer based on the image feature information.

Optionally, in an embodiment of this application, the network parameter includes a convolution kernel parameter and/or an attention mechanism parameter, and the attention mechanism parameter is used to use information that is in the image feature information and whose correlation with the point cloud data is greater than a correlation threshold as valid information for adjusting the point cloud feature recognition subnetwork.

Optionally, in an embodiment of this application, the apparatus further includes:

an output module, configured to separately obtain output data of the at least one network layer; and
an effect determining module, configured to determine, based on the output data, adjustment effect data corresponding to the network parameter.

Optionally, in an embodiment of this application, the semantic point cloud feature recognition network and the target detection network are obtained through training in the following manner:

obtaining a plurality of semantic point cloud training samples, where the semantic point cloud training samples include a point cloud data sample, an image sample projected to the point cloud data sample, and the semantic information of the image sample, and the three-dimensional location information of the target is labeled in the semantic point cloud training sample;
constructing the semantic point cloud feature recognition network and the target detection network, where an output end of the semantic point cloud feature recognition network is connected to an input end of the target detection network;

separately inputting the plurality of semantic point cloud training samples to the semantic point cloud feature recognition network, and outputting a prediction result by using the target detection network; and

performing iterative adjustment on network parameters of the semantic point cloud feature recognition network and the target detection network based on a difference between the prediction result and the labeled three-dimensional location information of the target, until iteration meets a preset requirement.

Optionally, in an embodiment of this application, the semantic extraction module 1003 is specifically configured to:

perform panoramic segmentation on the image, to generate the semantic information of the image, where the semantic information includes a panoramic segmentation image of the image, and the panoramic segmentation image includes image regions, obtained through panoramic segmentation, of different objects and category information corresponding to the image regions.

Optionally, in an embodiment of this application, the image includes a panoramic image.

According to a third aspect, an embodiment of this application provides a device. The terminal device may include the three-dimensional target detection apparatus.

Optionally, in an embodiment of this application, the device includes one of a vehicle, a robot, a mechanical arm, and a virtual reality device.

According to a fourth aspect, an embodiment of this application provides a three-dimensional target detection apparatus, including a processor, and a memory configured to store instructions executed by the processor. The processor is configured to execute the instructions, to perform the method according to any one of claims 1 to 9.

According to a fifth aspect, an embodiment of this application provides a non-volatile computer-readable storage medium, storing computer program instructions. When the computer program instructions are executed by a processor, the method in any one of the possible implementations in the foregoing aspects is implemented.

According to a sixth aspect, an embodiment of this application provides a computer program product, including computer-readable code, or non-volatile computer-readable storage medium carrying computer-readable code. When the computer-readable code is run on a processor of an electronic device, the processor of the electronic device is enabled to perform the method in any one of the possible implementations in the foregoing aspects is implemented.

According to a seventh aspect, an embodiment of this application provides a chip. The chip includes at least one processor, and the processor is configured to execute a computer program or computer instructions stored in a memory, to perform the method in any one of the possible implementations in the foregoing aspects is implemented.

Optionally, the chip may further include the memory. The memory is configured to store the computer program or the computer instructions.

Optionally, the chip may further include a communication interface, configured to communicate with another module other than the chip.

Optionally, one or more chips may form a chip system.

These aspects and other aspects of this application are more concise and more comprehensive in descriptions of the following (a plurality of) embodiments.

## BRIEF DESCRIPTION OF DRAWINGS

Accompanying drawings included in this specification and constituting a part of this specification and this specification jointly show example embodiments, features, and aspects of this application, and are intended to explain principles of this application.

FIG. 1 is a diagram of a system architecture of a three-dimensional target detection method according to an embodiment of this application;

FIG. 2 is a schematic diagram of a module structure of an intelligent vehicle 200 according to an embodiment of this application;

FIG. 3 is a schematic flowchart of a three-dimensional target detection method according to an embodiment of this application;

FIG. 4A is a schematic diagram of panoramic segmentation according to an embodiment of this application;

FIG. 4B is a schematic diagram of generating 360-degree semantic point cloud data according to an embodiment of this application;

FIG. 5 is a schematic flowchart of determining three-dimensional location information according to an embodiment of this application;

FIG. 6 is a schematic diagram of generating semantic point cloud data according to an embodiment of this application;

FIG. 7 is a schematic diagram of three-dimensional target detection according to an embodiment of this application;
FIG. 8 is a schematic flowchart of training a feature extraction network and a target detection network according to an embodiment of this application;
FIG. 9 is a schematic diagram of a module structure of a feature extraction network according to this application;
FIG. 10 is a schematic diagram of a module structure of a feature extraction network according to this application; and
FIG. 11 is a schematic diagram of a structure of a device according to an embodiment of this application.

## DESCRIPTION OF EMBODIMENTS

The following describes various example embodiments, features, and aspects of this application in detail with reference to the accompanying drawings. Identical reference numerals in the accompanying drawings indicate elements that have same or similar functions. Although various aspects of embodiments are illustrated in the accompanying drawing, the accompanying drawings are not necessarily drawn in proportion unless otherwise specified.

The specific term "example" herein means "used as an example, embodiment or illustration". Any embodiment described as "example" is not necessarily explained as being superior or preferred than other embodiments.

In addition, numerous specific details are given in the following specific implementations to better describe this application. A person skilled in the art should understand that this application may also be implemented without the specific details. In some embodiments, methods, means, components, and circuits well known by a person skilled in the art are not described in detail, so that a main purpose of this application is highlighted.

With emergence of various target detection algorithms (for example, RCNN and faster-RCNN), two-dimensional target detection has been widely applied to a plurality of scenarios, for example, pedestrian recognition. However, in application scenarios of self-driving, a robot, and augmented reality, two-dimensional target detection cannot provide all information required for sensing an environment, and can provide only a location of a target object in a two-dimensional image and a confidence of a corresponding category. However, in the real three-dimensional world, a target object has a three-dimensional shape, and most applications require parameter information such as a length, a width, a height, and a deflection angle of the target object. For example, in an autonomous driving scenario, indicators such as a three-dimensional size and a rotation angle of a target object need to be extracted from an image, and play an important role in path planning and control in a subsequent autonomous driving scenario.

Currently, three-dimensional target detection is rapidly developing. In a related technology, three-dimensional target detection is mainly performed based on point cloud data captured by a LIDAR. Specifically, feature information of the point cloud data may be extracted by using a neural network, and then three-dimensional location information, of the point cloud data, of the target object is determined based on the feature information. However, because the point cloud data has features such as low resolution and lacking semantic information, detection precision of a three-dimensional target detection method in the prior art is low, especially for a long-distance target object or a target in a spasmodic point cloud scenario.

Based on a technical requirement similar to the foregoing technical requirement, embodiments of this application provides a three-dimensional target detection method. According to the embodiments, three-dimensional location information of a target object in a target environment can be recognized based on two-dimensional image information and three-dimensional point cloud data. Advantages of high resolution, a long visual distance, and rich semantic information of an image are combined with advantages of accurate three-dimensional information of point cloud data, to greatly improve accuracy and precision of object detection. In addition, in a process of determining three-dimensional location information of a target in the target environment, semantic information of an image may be obtained, and then the three-dimensional location information of the target is determined with reference to point cloud data, the image, and the semantic information. In this manner, the semantic information of the image can be enhanced during three-dimensional target detection, to improve precision of three-dimensional target detection.

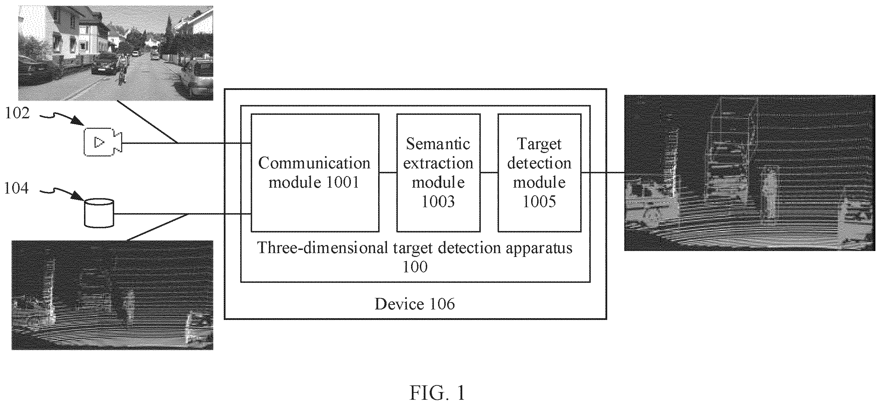

The three-dimensional target detection method provided in this embodiment of this application may be applied to an application scenario including but not limited to an application scenario shown in FIG. 1. As shown in FIG. 1, the scenario includes an image capture device 102, a point cloud capture device 104, and a device 106. The image capture device 102 may specifically be a camera, including but not limited to a monocular camera, a multi-lens camera, a depth camera, and the like. The point cloud capture device 104 may specifically be a LIDAR, including a single-line LIDAR and a multi-line LIDAR. The device 106 is a processing device. The processing device has a central processing unit (Central Processing Unit, CPU) and/or a graphics processing unit (Graphics Processing Unit, GPU), and is configured to process an image captured by the image capture device and point cloud data captured by the point cloud capture device, to implement three-dimensional target detection. It should be noted that the device 106 may be a physical device or a physical device cluster, for example, a terminal, a server, or a server cluster. Certainly, the device 106 may alternatively be a virtualized cloud device, for example, at least one cloud computing device in a cloud computing cluster.

In some embodiments, the image capture device 102 captures an image in a target environment, and the point cloud capture device 104 captures point cloud data in the target environment, for example, an image and point cloud data of a same road segment. Then, the image capture device 102 sends the image to the device 106, and the point cloud capture device 104 sends the point cloud data to the device 106. A three-dimensional object detection apparatus 100 is deployed in the device 106, and the three-dimensional object detection apparatus 100 includes a communication module 1001, a semantic extraction module 1003, and a target detection module 1005. The communication module 1001 obtains the image and the point cloud data.

The semantic extraction module 1003 is configured to extract semantic information from the image. The semantic information may include, for example, image regions, in the image, of different objects and category information of the object, and the category information includes, for example, category information such as pedestrian, vehicle, road, and tree. Then, the target detection module 1005 may obtain three-dimensional location information of a target in the target environment based on the point cloud data, the image, and the semantic information of the image.

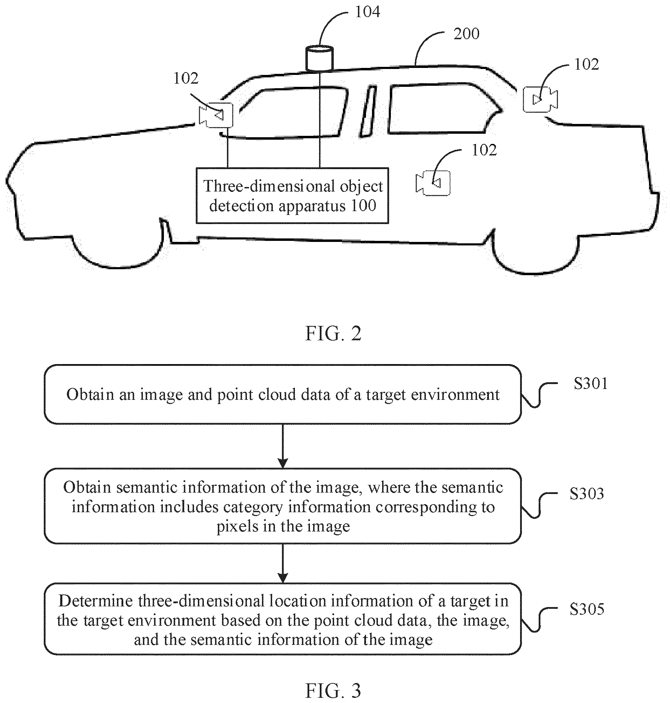

In another implementation scenario, as shown in FIG. 2, the device 106 may specifically be an intelligent vehicle 200. One or more sensors such as a LIDAR, a camera, a global navigation satellite system (Global Navigation Satellite System, GNSS), and an inertia measurement unit (Inertial Measurement Unit, IMU) may be installed in the intelligent vehicle 200. In the intelligent vehicle 200, the three-dimensional object detection apparatus 100 may be disposed in a vehicle-mounted computer, the LIDAR and the camera may transmit obtained data to the vehicle-mounted computer, and the three-dimensional object detection apparatus 100 completes three-dimensional object detection on the target environment. In an embodiment of this application, as shown in FIG. 2, a plurality of image capture devices 102 may be installed on the intelligent vehicle 200, and specific installation locations may include a front side, a rear side, two sides, and the like of the intelligent vehicle 200, to capture a surround-view image at a plurality of angles around the intelligent vehicle 200. A quantity of the image capture devices 102 and installation locations of the image capture devices 102 on the intelligent vehicle 200 are not limited in this application. After obtaining the three-dimensional location information of the target object in the target environment, the intelligent vehicle 200 may implement driving decisions such as route planning and obstacle avoidance. Certainly, the three-dimensional object detection apparatus 100 may alternatively be embedded into the vehicle-mounted computer, the LIDAR, or the camera in a form of a chip. The chip may specifically be a multi-domain controller (Multi-Domain Controller, MDC). This is not limited in this application.

Certainly, in another application, the device 106 may further include a robot, a robot arm, a virtual reality device, and the like. This is not limited in this application.

The following describes the three-dimensional target detection according to an embodiment of this application in detail with reference to the accompanying drawings. FIG. 3 is a schematic flowchart of a three-dimensional target detection method according to some embodiments of this application. Although this application provides method operation steps shown in the following embodiments or the accompanying drawings, the method may include more or fewer operation steps based on conventional or uncreative effort. In steps without a necessary causal relationship in logic, an execution sequence of the steps is not limited to an execution sequence provided in this embodiment of this application. In an actual three-dimensional target detection process or when an apparatus performs the method, the method may be performed in sequence or in parallel (for example, in a parallel processor or a multi-thread processing environment) based on a sequence of the method shown in the embodiment or the accompanying drawings.

In some embodiments, an embodiment of the three-dimensional target detection method according to this application is shown in FIG. 3. The method may include the following steps.

S301: Obtain an image and point cloud data of a target environment.

In an embodiment of this application, the image and the point cloud data of the target environment may be captured by using a vehicle. An image capture device 1002 and a point cloud capture device 1004 may be deployed in the vehicle. Certainly, the vehicle may further include one or more other sensors such as a global navigation satellite system (Global Navigation Satellite System, GNSS) and an inertia measurement unit (Inertial Measurement Unit, IMU), to record information such as time and a location at which the image or the point cloud data is obtained. Specifically, the image capture device 1002 is mainly configured to capture an image of a target object, for example, pedestrian, vehicle, road, or greening in the target environment. The image may include a format in any form such as BMP, JPEG, PNG, and SVG. The point cloud capture device 1004 is mainly configured to collect the point cloud data of the target environment. Because a point cloud capture device like a LIDAR can precisely reflect location information, a width of a road surface, a height of a pedestrian, a width of a vehicle, a height of a signal light, and some other information may be obtained by using the point cloud capture device. The GNSS may be configured to record coordinates of the currently captured image and the point cloud data. The IMU is mainly configured to record information about an angle and an acceleration of the vehicle. It should be noted that the image may include a plurality of images, for example, 360-degree surround-view images obtained by using a plurality of image capture devices 1002 in the intelligent vehicle 200, that are of the target environment and that are obtained at a same moment and at different angles. The image may alternatively include a panoramic image obtained by splicing the plurality of images at different angles. This is not limited herein. In addition, the image capture device 1002 may obtain an image or a video stream by photographing the target environment. When the image capture device 1002 obtains the video stream through photographing, the three-dimensional object detection apparatus 100 may decode the video stream after obtaining the video stream, to obtain several frames of images, and then obtain the image from the several frames of images.

During three-dimensional target detection, an image and point cloud data that are at a same moment and at a same location need to be jointly detected. Therefore, the image and the point cloud data correspond to a same capture moment.

Certainly, in some other other embodimentss, the image and the point cloud data of the target environment may be captured by using other capture devices. For example, the capture devices may include a roadside capture device, and the image capture device 1002 and the point cloud capture device 1004 may be mounted on the roadside capture device. The capture device may further include a robot. The image capture device 1002 and the point cloud capture device 1004 may be mounted on the robot. The capture device is not limited in this application.

S303: Obtain semantic information of the image, where the semantic information includes category information corresponding to pixels in the image.

In this embodiment of this application, the semantic information of the image may be obtained. The image may include original information such as a size and a color value of each pixel, for example, an RGB value and a grayscale value. The semantic information of the image may be determined based on the original information of the image, to further obtain information semantic-related information of the image. The semantic information may include category information corresponding to each pixel in the image, and the category information includes, for example, category information such as pedestrian, vehicle, road, tree, and building.

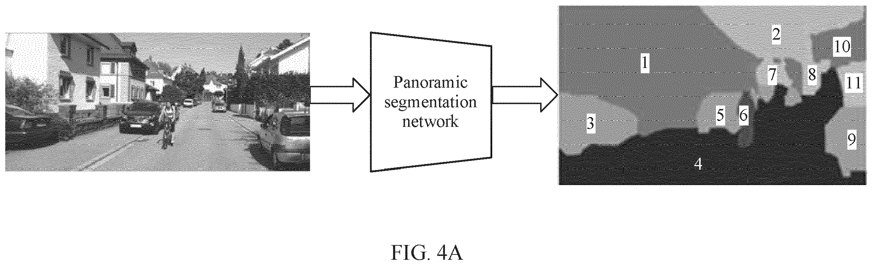

In an embodiment of this application, the semantic information of the image may be obtained through panoramic segmentation (Panoramic segmentation). Specifically, panoramic segmentation may be performed on the image, to generate the semantic information of the image. The semantic information includes a panoramic segmentation image of the image, and the panoramic segmentation image includes image regions, obtained through panoramic segmentation, of different objects and category information corresponding to the image regions. In an example shown in FIG. 4A, the image may be input to a panoramic segmentation network, and a panoramic segmentation image is output by using the panoramic segmentation network. As shown in FIG. 4A, the panoramic segmentation image may include a plurality of image blocks, and image blocks with a same color indicate that target objects belong to a same category. For example, image blocks 1 and 10 belong to buildings, image blocks 3, 5, and 9 belong to vehicles, an image block 2 is the sky, an image block 4 is a road surface, an image block 6 is a person, and image blocks 7, 8, and 11 belong to trees. The panoramic segmentation network may be obtained through training based on an image sample set, and the image sample set may include target objects of common categories.

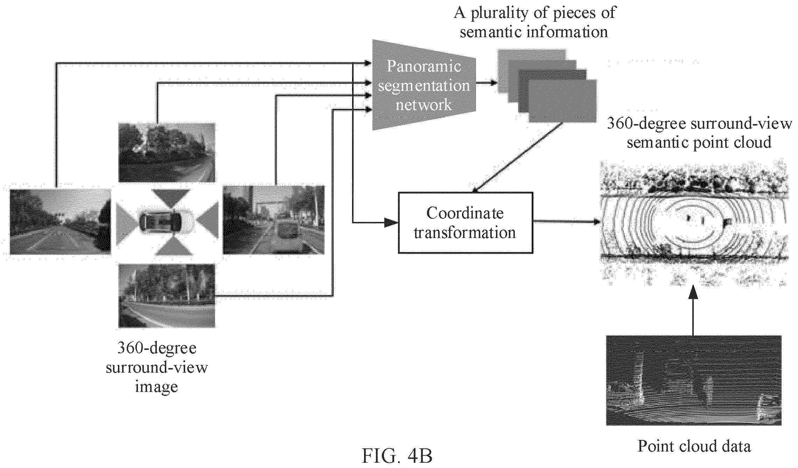

In other embodiments, when the image includes the 360-degree surround-view images of the target environment, namely, a plurality of images at different angles, as shown in FIG. 4B, panoramic segmentation may be separately performed on the plurality of images, and semantic information separately corresponding to the plurality of images is obtained.

Certainly, in other embodiments, any algorithm, for example semantic segmentation (Semantic Segmentation) or instance segmentation (Instance segmentation), that can determine the semantic information of the image may alternatively be used. This is not limited in this application.

S305: Determine three-dimensional location information of a target in the target environment based on the point cloud data, the image, and the semantic information of the image.

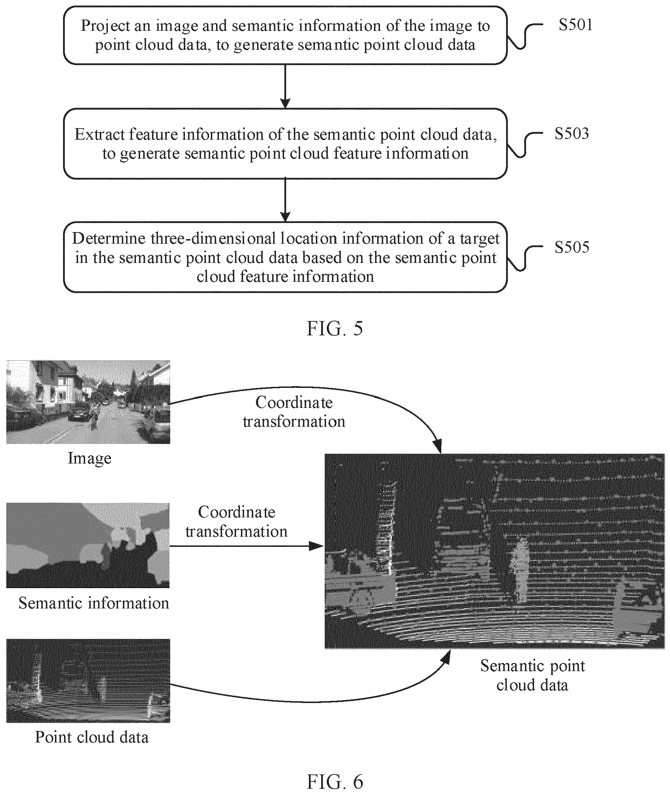

In this embodiment of this application, after the semantic information of the image is determined, the three-dimensional location information of the target in the target environment may be determined based on the point cloud data, the image, and the semantic information. Herein, the three-dimensional location information of the target in the target environment is determined with reference to at least three types of data, to provide a rich information basis, and improve precision of three-dimensional target detection. In an embodiment of this application, as shown in FIG. 5, that the three-dimensional location information of the target in the target environment is determined may specifically include the following steps.

S501: Project the image and the semantic information of the image to the point cloud data, to generate semantic point cloud data.

In this embodiment of this application, because the image and the point cloud data are captured by different devices, spatial coordinate systems in which the image and the point cloud data are located are different. The image may be based on a coordinate system of the image capture device 1002, for example, a camera coordinate system. The point cloud data may be based on a coordinate system of the point cloud capture device 1004, for example, a LIDAR coordinate system. In view of this, the image and the point cloud data may be unified into a same coordinate system. In an embodiment of this application, the image and the semantic information may be projected to the point cloud data, that is, the image and the semantic information is transformed into a coordinate system corresponding to the point cloud data. After the image and the semantic information are projected to the point cloud data, the semantic point cloud data may be generated.

In a specific embodiment, in a process of projecting the image and the semantic information to the point cloud data, calibration extrinsic parameters, for example, three rotation parameters and three translation parameters, of the image capture device 1002 and the point cloud capture device 1004 may be obtained, and a coordinate transformation matrix P from the image capture device 1002 to the point cloud capture device 1004 is determined based on the calibration extrinsic parameters. In this case, an image $\hat{X}_{RGB}$ obtained by transforming the original image $X_{RGB}$ and semantic information $\hat{X}_{mask}$ obtained by transforming the original semantic information $X_{mask}$ may be respectively represented as:

$$\hat{X}_{RGB} = \mathrm{proj}(X_{RGB}, P), \hat{X}_{mask} = \mathrm{proj}(X_{mask}, P)$$

proj() indicates a projection operation.

After the projected image $\hat{X}_{RGB}$ and the projected semantic information $\hat{X}_{mask}$ are determined, $\hat{X}_{RGB}$, $\hat{X}_{mask}$, and the point cloud data $X_{point}$ may be spliced into the semantic point cloud data X. FIG. 6 shows an effect diagram of generating the semantic point cloud data. As shown in FIG. 6, the semantic point cloud data generated after the image, the semantic information, and the point cloud data includes richer information. FIG. 4B further shows an effect diagram in a case in which the image includes the 360-degree surround-view images. As shown in FIG. 4B, coordinate transformation may be performed on each of the 360-degree surround-view images and semantic information corresponding to each image, and each image and the semantic information corresponding to each image are projected to the point cloud data, to generate a 360-degree surround-view semantic point cloud shown in FIG. 4B, to obtain more image information. The point cloud data $X_{point}$ may include location information (x, y, z) and a reflectance r of each observation point. After the image and the semantic information are projected to the point cloud data, each observation point in the semantic point cloud data X may not only include the location information and the reflectance, but also include color information and category semantic information. The semantic point cloud data may be represented as:

$$X \in R^{\{N,(4+3+C_K)\}}$$

$R^{\{\}}$ indicates a real number set, N indicates a quantity of observation points in the semantic point cloud data, 4 indicates information included in the point cloud data, namely, the location information (x, y, z) and the reflectance r, 3 indicates image information, namely, an RGB value, and $C_K$ indicates the category semantic information of the observation point.

S503: Extract feature information of the semantic point cloud data, to generate semantic point cloud feature information.

S505: Determine the three-dimensional location information of the target in the semantic point cloud data based on the semantic point cloud feature information.

In this embodiment of this application, the semantic point cloud data not only includes the point cloud data, but also includes the image information and the semantic information corresponding to the image. In view of this, the extracted semantic point cloud feature information of the semantic point cloud data also includes feature information corresponding to the foregoing data. Semantic point cloud feature extraction and target detection are separately completed in two steps, to reduce complexity of three-dimensional target detection. Certainly, in other embodiments, the three-dimensional location information of the target in the semantic point cloud data may be directly determined based on the semantic point cloud data. This is not limited in this application.

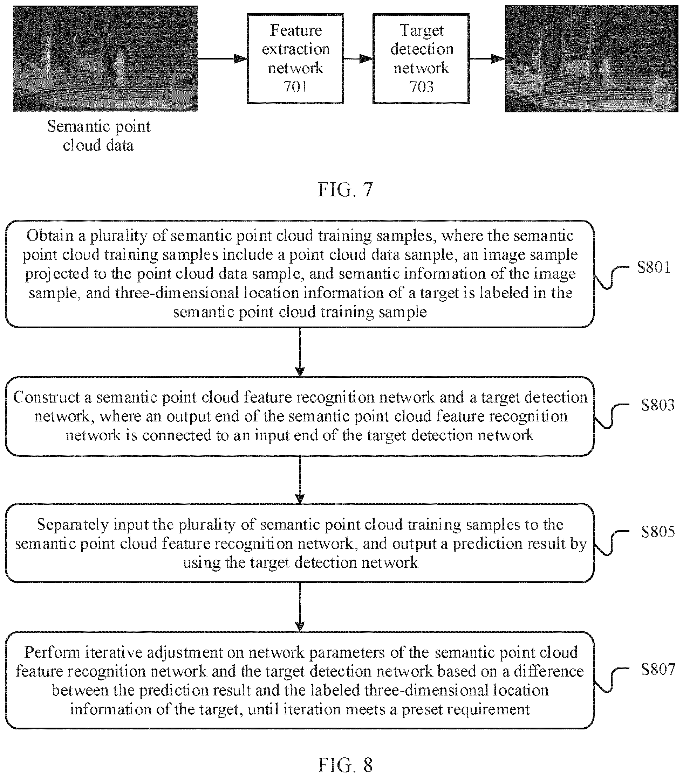

In an embodiment of this application, as shown in FIG. 7, the semantic point cloud data may be input to a semantic point cloud feature recognition network 701, and the semantic point cloud feature information is output by using the semantic point cloud feature recognition network 701. Then, the semantic point cloud feature information may be input to a target detection network 703, and the three-dimensional location information of the target in the semantic point cloud data is output by using the target detection network 703. As shown in FIG. 6, the three-dimensional location information may be represented by using a three-dimensional frame body in the semantic point cloud data, and the three-dimensional frame body includes at least the following information: coordinates (x, y, z) of a central point of the frame body, a size (a length, a width, and a height) of the frame body, and a course angle θ. The three-dimensional location information of the target, framed by the three-dimensional frame body, in the target environment may be determined based on the information about the three-dimensional frame body.

In this embodiment of this application, in a process of training the semantic point cloud feature recognition network 701 and the target detection network 703, a supervised machine learning training manner may be used. In this case, a result needs to be labeled in a training sample. Because the semantic point cloud feature information is information that cannot be labeled, and the three-dimensional location information of the target is information that can be labeled, the semantic point cloud feature recognition network 701 and the target detection network 703 may be jointly trained. In an embodiment of this application, as shown in FIG. 8, the semantic point cloud feature recognition network 701 and the target detection network 703 may specifically be obtained through training in the following steps.

S801: Obtain a plurality of semantic point cloud training samples, where the semantic point cloud training samples include a point cloud data sample, an image sample projected to the point cloud data sample, and the semantic information of the image sample, and the three-dimensional location information of the target is labeled in the semantic point cloud training sample.

S803: Construct the semantic point cloud feature recognition network 701 and the target detection network 703, where an output end of the semantic point cloud feature recognition network 701 is connected to an input end of the target detection network 703.

S805: Separately input the plurality of semantic point cloud training samples to the semantic point cloud feature recognition network 701, and output a prediction result by using the target detection network 703.

S807: Perform iterative adjustment on network parameters of the semantic point cloud feature recognition network 701 and the target detection network 703 based on a difference between the prediction result and the labeled three-dimensional location information of the target, until iteration meets a preset requirement.

In an embodiment of this application, the semantic point cloud training sample may include actually captured data, or may use an existing dataset. This is not limited in this application. Before the semantic point cloud training sample is input to the semantic point cloud feature recognition network 701, the semantic point cloud training sample may be divided into a plurality of unit data cubes with preset sizes. The unit data cube may include a voxel (Voxel), a point pillar (Point pillar), and the like. In this way, an irregular semantic point cloud training sample may be transformed to a regular data cube, to reduce difficulty in subsequent data processing. The prediction result may include a prediction target of the semantic point cloud data, a three-dimensional location of the prediction target, and a probability that the prediction target appears at the three-dimensional location. That iteration meets a preset requirement may include that a difference between the prediction result and the labeled three-dimensional location information of the target is less than a difference threshold. The difference threshold may be, for example, set to 0.01, 0.05, or the like. That iteration meets a preset requirement may alternatively include that a quantity of times of iteration is greater than a preset quantity threshold. The preset quantity threshold may be set to, for example, 50 times, 60 times, or the like. The semantic point cloud feature recognition network 701 and the target detection network 703 may include a convolutional neural network (Convolutional Neural Network, CNN) and a plurality of CNN-based network modules, for example, AlexNet, ResNet, ResNet1001 (pre-activation), Hourglass, Inception, Xception, and SENet. This is not limited in this application.

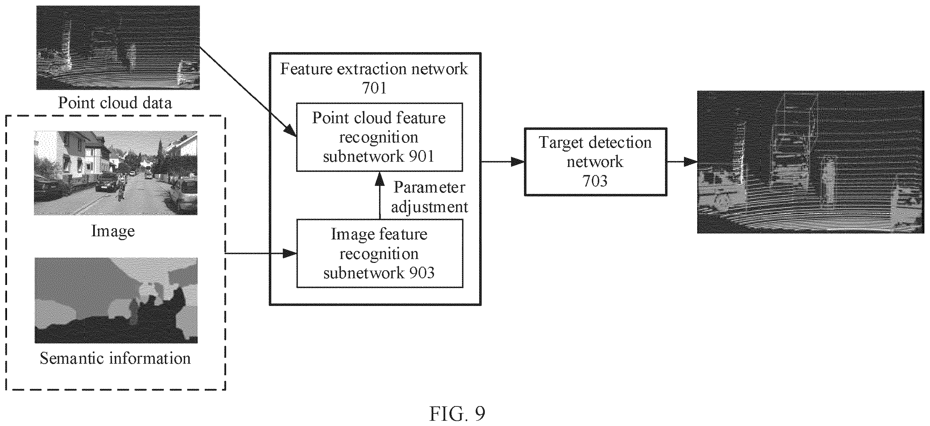

In this embodiment of this application, after the image and the semantic information are projected to the point cloud data, the image and the point cloud data are still data independent of each other, and the image and the point cloud data have respective data features. In view of this, as shown in FIG. 9, the semantic point cloud feature recognition network 701 may be divided into a point cloud feature recognition subnetwork 901 and an image feature recognition subnetwork 903.

The point cloud feature recognition subnetwork 901 is used to extract point cloud feature information of the point cloud data.

The image feature recognition subnetwork 903 is used to extract image feature information of the image based on the image and the semantic information, and dynamically adjust a network parameter of the point cloud feature recognition subnetwork based on the image feature information.

Specifically, the point cloud data may be input to the feature recognition subnetwork 901, and the point cloud feature information of the point cloud data is output by using the feature recognition subnetwork 901. Certainly, before the point cloud data is input to the feature recognition subnetwork 901, irregular point cloud data may alternatively be divided into unit data cubes with a regular size, for example, a voxel and a point pillar. In another aspect, the image and the semantic information of the image may be input to the image feature recognition subnetwork 903, and the image feature information of the image is output by using the image feature recognition subnetwork 903. Then, the image feature information may be used to dynamically adjust the network parameter of the point cloud feature recognition subnetwork. In this way, point cloud feature information output by the dynamically adjusted point cloud feature recognition subnetwork 901 is the semantic point cloud feature information. In this embodiment of this application, the network parameter may include any parameter that can be adjusted in a neural network, for example, a convolution (Convolution) kernel parameter and a regularization (Batch Normalization) parameter. In a specific example, the generated semantic point cloud feature information y may be represented as:

$$y = W \otimes X_{point}$$

$$W = G(f_{img})$$

W indicates the convolution kernel parameter, $X_{point}$ indicates the point cloud data, $\otimes$ indicates a convolution operation, G() indicates a convolution kernel generation module, and $f_{img}$ indicates the image feature information.

In other words, in a process of adjusting the network parameter of the point cloud feature recognition subnetwork 901 based on the image feature information, the corresponding convolution kernel parameter needs to be generated by using the convolution kernel generation module. The convolution kernel generation module is a function represented by a neural network. In a specific example, the convolution kernel generation module may include:

$$G\big(f_{img}\big) = W_1\delta(W_2 f_{img})$$

$W_1$ and $W_2$ indicate parameters in the convolution kernel generation module, and $\delta$ indicates an activation function (for example, ReLu). Certainly, a result generated by the convolution kernel generation module may not match a size of a convolution kernel of the point cloud feature recognition subnetwork 901. In view of this, the convolution kernel generation module may further generate parameter prediction that matches the size of the convolution kernel of the point cloud feature recognition subnetwork 901.

In this embodiment of this application, in the foregoing manner of dynamically adjusting the network parameter based on the image feature information, an optimization algorithm (for example, a gradient of a loss function) corresponding to the point cloud feature recognition subnetwork 901 may not only be used to adjust a parameter like the convolution kernel of the point cloud feature recognition subnetwork 901, but also be used to adjust a parameter in a convolution kernel generation function, so that a feature of the point cloud data and a feature of the image are fused in the point cloud feature recognition subnetwork 901. This improves detection accuracy of the point cloud feature recognition subnetwork 901.

In an actual application scenario, the neural network usually includes a plurality of network layers. As shown in FIG. 9, the point cloud feature recognition subnetwork 901 in this embodiment of this application may include N network layers, where N≥2. In view of this, in an embodiment of this application, the image feature recognition subnetwork 903 may be connected to each network layer, and a network parameter at each network layer is dynamically adjusted based on the image feature information output by the image feature recognition subnetwork 903. In this manner, as the image feature information increases with a quantity of network layers, influence of the image feature information on point cloud feature extraction may be gradually enhanced. Similarly, the network parameter may include any parameter that can be adjusted in the neural network, for example, a convolution kernel parameter and a regularization (Batch Normalization) parameter.

In an embodiment of this application, the network parameter may further include an attention mechanism parameter. In other words, as shown in FIG. 9, an attention mechanism may be added between the point cloud feature recognition subnetwork 901 and the image feature recognition subnetwork 903, that is, information that is in the image feature information and whose correlation with the point cloud data is large is used to adjust the network parameter of the point cloud feature recognition subnetwork 901. Specifically, information that is in the image feature information and whose correlation with the point cloud data is greater than a correlation threshold may be used as valid information for adjusting the point cloud feature recognition subnetwork, and the correlation threshold may be automatically generated based on a model. In an embodiment of this application, the attention mechanism parameter may be determined based on the correlation between the image feature information and the point cloud data. In a specific example, the generated semantic point cloud feature information y may be represented as:

$$y = \text{Attnetion} \odot \big(W \otimes X_{point}\big)$$

$$\text{Attention} = \gamma * \delta\big(X_{point}, f_{img}\big)$$

$$\delta\big(X_{point}, f_{rgb}\big) = \psi\big(f_{img}\big)^T \beta\big(X_{point}\big)$$

Attnetion $\odot$ indicates an attention function, W indicates the convolution kernel parameter, $X_{point}$ indicates the point cloud data, $\otimes$ indicates a convolution operation, $\gamma$ indicates a parameter in the attention function, $f_{img}$ indicates the image feature information, and $\delta()$ may include a point multiplication operation.

Certainly, the attention parameter is not limited to the foregoing example, and may alternatively be determined by using a function that can implement the attention mechanism. This is not limited in this application. In this embodiment of this application, the semantic point cloud feature information is determined based on the attention parameter and another network parameter together, to further increase a useful information amount in the semantic point cloud feature information, and improve precision of three-dimensional target detection.

According to this embodiment of this application, an output result at each network layer may further be obtained, to obtain a contribution degree of the image feature information to each network layer. In view of this, in an embodiment of this application, output data of the at least one network layer may be separately obtained, and adjustment effect data corresponding to the network parameter may be determined based on the output data. The network parameter may include the convolution kernel parameter, the regularization parameter, the attention mechanism parameter, and the like. The output data may include a detection result of the target in the point cloud data, and the corresponding adjustment effect data may include data such as a difference between output results at network layers and a difference between the output result at the network layer and a final output result. In addition, a user can view the output result at each network layer and directly learn adjustment effect at each network layer. In this embodiment of this application, in comparison with black-box prediction at a common neural network layer, a network whose parameter is dynamically adjusted can enhance explainability of network prediction.

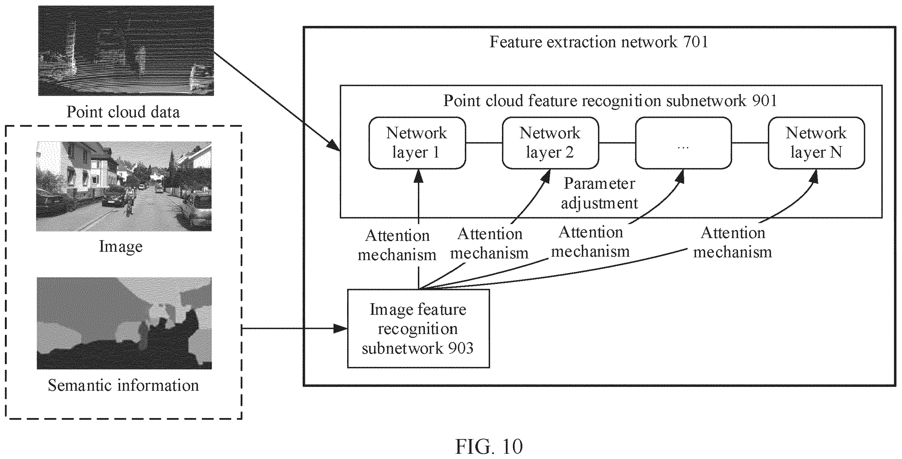

The foregoing describes in detail the three-dimensional target detection method according to this application with reference to FIG. 1 to FIG. 10. The following describes a three-dimensional target detection apparatus 100 and a device 106 according to this application with reference to the accompanying drawings.

Refer to the schematic diagram of the structure of the three-dimensional target detection apparatus 100 in the diagram of the system architecture shown in FIG. 1. As shown in FIG. 1, the apparatus 100 includes:

a communication module 1001, configured to obtain an image and point cloud data of a target environment;
a semantic extraction module 1003, configured to obtain semantic information of the image, where the semantic information includes category information corresponding to pixels in the image; and
a target detection module 1005, configured to determine three-dimensional location information of a target in the target environment based on the point cloud data, the image, and the semantic information of the image.

Optionally, in an embodiment of this application, the target detection module 1005 is specifically configured to:

project the image and the semantic information of the image to the point cloud data, to generate semantic point cloud data;
extract feature information of the semantic point cloud data, to generate semantic point cloud feature information; and
determine the three-dimensional location information of the target in the semantic point cloud data based on the semantic point cloud feature information.

Optionally, in an embodiment of this application, the semantic point cloud feature information is output by using a semantic point cloud feature recognition network, and the three-dimensional location information is output by using a target detection network.

Optionally, in an embodiment of this application, the semantic point cloud feature recognition network includes a point cloud feature recognition subnetwork and an image feature recognition subnetwork.

The point cloud feature recognition subnetwork is used to extract point cloud feature information of the point cloud data.

The image feature recognition subnetwork is used to extract image feature information of the image based on the image and the semantic information, and dynamically adjust a network parameter of the point cloud feature recognition subnetwork based on the image feature information.

Optionally, in an embodiment of this application, the point cloud feature recognition subnetwork includes at least one network layer, and the image feature recognition subnetwork is separately connected to the at least one network layer.

The image feature recognition subnetwork is specifically used to extract the image feature information of the image based on the image and the semantic information, and separately and dynamically adjust a network parameter of the at least one network layer based on the image feature information.

Optionally, in an embodiment of this application, the network parameter includes a convolution kernel parameter and/or an attention mechanism parameter, and the attention mechanism parameter is used to use information that is in the image feature information and whose correlation with the point cloud data is greater than a correlation threshold as valid information for adjusting the point cloud feature recognition subnetwork.

Optionally, in an embodiment of this application, the apparatus further includes:

an output module, configured to separately obtain output data of the at least one network layer; and
an effect determining module, configured to determine, based on the output data, adjustment effect data corresponding to the network parameter.

Optionally, in an embodiment of this application, the semantic point cloud feature recognition network and the target detection network are obtained through training in the following manner:

obtaining a plurality of semantic point cloud training samples, where the semantic point cloud training samples include a point cloud data sample, an image sample projected to the point cloud data sample, and the semantic information of the image sample, and the three-dimensional location information of the target is labeled in the semantic point cloud training sample;

constructing the semantic point cloud feature recognition network and the target detection network, where an output end of the semantic point cloud feature recognition network is connected to an input end of the target detection network;

separately inputting the plurality of semantic point cloud training samples to the semantic point cloud feature recognition network, and outputting a prediction result by using the target detection network; and

performing iterative adjustment on network parameters of the semantic point cloud feature recognition network and the target detection network based on a difference between the prediction result and the labeled three-dimensional location information of the target, until iteration meets a preset requirement.

Optionally, in an embodiment of this application, the semantic extraction module 1003 is specifically configured to:

perform panoramic segmentation on the image, to generate the semantic information of the image, where the semantic information includes a panoramic segmentation image of the image, and the panoramic segmentation image includes image regions, obtained through panoramic segmentation, of different objects and category information corresponding to the image regions.

Optionally, in an embodiment of this application, the image includes a panoramic image.

The three-dimensional target detection apparatus 100 according to this embodiment of this application is configured to perform the corresponding method in embodiments of this application. In addition, the foregoing and other operations and/or functions of the modules in the three-dimensional target detection apparatus 100 are separately configured to implement the corresponding procedures of the methods in FIG. 3, FIG. 5, and FIG. 7. For brevity, details are not described herein again.

In addition, it should be noted that the foregoing described embodiments are merely examples. The modules described as separate parts may or may not be physically separate, and parts displayed as modules may or may not be physical modules, that is, may be located in one place, or may be distributed to a plurality of network modules. Some or all the modules may be selected based on an actual requirement to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

An embodiment of this application further provides a device 106, configured to implement a function of the three-dimensional target detection apparatus 100 in the diagram of the system architecture shown in FIG. 1. The device 106 may be a physical device or a physical device cluster, or may be a virtualized cloud device, for example, at least one cloud computing device in a cloud computing cluster. For ease of understanding, in this application, a structure of the device 106 is described by using an example in which the device 106 is an independent physical device.

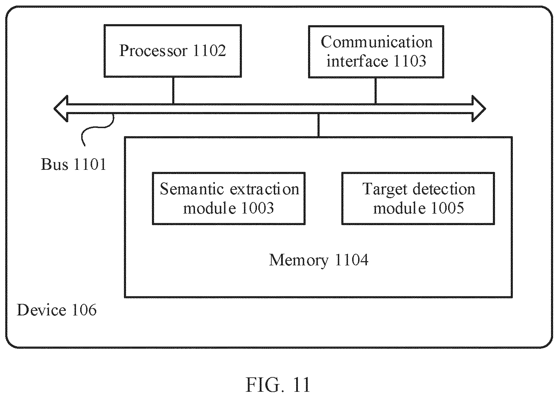

FIG. 11 is a schematic diagram of a structure of a device 106. As shown in FIG. 11, the device 106 includes a bus 1101, a processor 1102, a communication interface 1103, and a memory 1104. The processor 1102, the memory 1104, and the communication interface 1103 communicate with each other by using the bus 1101. The bus 1101 may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of representation, only one bold line is used to represent the bus in FIG. 11, but this does not mean that there is only one bus or only one type of bus. The communication interface 1103 is configured to communicate with the outside, for example, obtain an image and point cloud data of a target environment.

The processor 1102 may be a central processing unit (central processing unit, CPU). The memory 1104 may include a volatile memory (volatile memory), for example, a random access memory (random access memory, RAM). Alternatively, the memory 1104 may include a non-volatile memory (non-volatile memory), for example, a read-only memory (read-only memory, ROM), a flash memory, an HDD, or an SSD.

The memory 1104 stores executable code, and the processor 1102 executes the executable code to perform the three-dimensional target detection method.

Specifically, when the embodiment shown in FIG. 1 is implemented, and the modules of the three-dimensional target detection apparatus 1040 described in the embodiment in FIG. 1 are implemented by using software, software or program code required for executing functions of the semantic extraction module 1003 and the target detection module 1005 in FIG. 1 is stored in the memory 1104. The processor 1102 executes the program code, stored in the memory 1104, corresponding to each module, for example, program code corresponding to the semantic extraction module 1003 and the target detection module 1005, to obtain semantic information of the image, and determines three-dimensional location information of a target in the target environment based on the point cloud data, the image, and the semantic information of the image. In this way, the target in the target environment is detected, to implement target sensing of self-driving.

An embodiment of this application further provides a computer-readable storage medium. The computer-readable storage medium includes instructions, and the instructions instruct a device 106 to perform the three-dimensional target detection method applied to the three-dimensional target detection apparatus 100.

An embodiment of this appli cation further provides a computer program product. When the computer program product is executed by a computer, the computer performs any one of the foregoing three-dimensional target detection methods. The computer program product may be a software installation package. If any one of the foregoing three-dimensional target detection methods needs to be used, the computer program product may be downloaded, and the computer program product may be executed on a computer.

Based on descriptions of the foregoing implementations, a person skilled in the art may clearly understand that this application may be implemented by software in addition to necessary universal hardware, or by special-purpose hardware, including a special-purpose integrated circuit, a special-purpose CPU, a special-purpose memory, a special-purpose component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a special-purpose circuit. However, as for this application, software program implementation is a better implementation in most cases. Based on such an understanding, the technical solutions of this application essentially, or the part contributing to a conventional technology may be implemented in a form of a software product. The computer software product is stored in a readable storage medium, for example, a floppy disk, a USB flash drive, a removable hard disk, a ROM, a RAM, a magnetic disk, or an optical disc on a computer, and includes several instructions for instructing a computer device (that may be a personal computer, a training device, or a network device) to perform the methods described in embodiments of this application.

All or some of the foregoing embodiments may be implemented by using software, hardware, firmware, or any combination thereof. When software is used to implement the embodiments, all or a part of the embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a special-purpose computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, through a coaxial cable, an optical fiber, or a digital subscriber line (DSL)) or wireless (for example, through infrared, radio, or microwaves) manner. The computer-readable storage medium may be any usable medium accessible by the computer, or a data storage device, for example, a training device or a data center, integrating one or more usable media. The usable medium may be a magnetic medium (for example, a floppy disk, a hard disk, or a magnetic tape), an optical medium (for example, a DVD), a semiconductor medium (for example, a solid-state disk (Solid-State Disk, SSD)), or the like.

The computer-readable program instructions or code described herein may be downloaded from a computer-readable storage medium to each computing/processing device, or downloaded to an external computer or an external storage device over a network, for example, the internet, a local area network, a wide area network, and/or a wireless network. The network may include copper transmission cables, optical fiber transmission, wireless transmission, routers, firewalls, switches, gateway computers, and/or edge servers. A network adapter card or a network interface in each computing/processing device receives computer-readable program instructions from a network, and forwards the computer-readable program instructions for storage in a computer-readable storage medium in each computing/processing device.

The computer program instructions used to perform operations in this application may be assembly instructions, instruction set architecture (Instruction Set Architecture, ISA) instructions, machine instructions, machine-related instructions, microcode, firmware instructions, status setting data, or source code or target code written in one or any combination of more programming languages. The programming languages include object-oriented programming languages such as Smalltalk and C++, and a conventional procedural programming language like "C" or a similar programming language. All computer-readable program instructions may be executed on a user computer, or some may be executed on a user computer as a standalone software package, or some may be executed on a local computer of a user while some is executed on a remote computer, or all the instructions may be executed on a remote computer or a server. When the remote computer is involved, the remote computer may be connected to a user computer over any type of network, including a local area network (Local Area Network, LAN) or a wide area network (Wide Area Network, WAN), or may be connected to an external computer (for example, connected by using an Internet service provider over the Internet). In some embodiments, an electronic circuit, for example, a programmable logic circuit, a field programmable gate array (Field Programmable Gate Array, FPGA), or a programmable logic array (Programmable Logic Array, PLA), is customized by using status information of computer-readable program instructions. The electronic circuit may execute the computer-readable program instructions, to implement various aspects of this application.

The various aspects of this application are described herein with reference to the flowcharts and/or the block diagrams of the method, the apparatus (system), and the computer program product according to embodiments of this application. It should be understood that each block in the flowcharts and/or the block diagrams and combinations of blocks in the flowcharts and/or the block diagrams may be implemented by computer-readable program instructions.

These computer-readable program instructions may be provided to a processor of a general-purpose computer, a special-purpose computer, or another programmable data processing apparatus to produce a machine, so that the instructions, when executed by the processor of the computer or the another programmable data processing apparatus, create an apparatus for implementing functions/actions specified in one or more blocks in the flowcharts and/or the block diagrams. Alternatively, these computer-readable program instructions may be stored in a computer-readable storage medium. These instructions enable a computer, a programmable data processing apparatus, and/or another device to work in a specific manner. Therefore, the computer-readable medium storing the instructions includes an artifact that includes instructions for implementing various aspects of functions/actions specified in one or more blocks in the flowcharts and/or the block diagrams.

Alternatively, these computer-readable program instructions may be loaded onto a computer, another programmable data processing apparatus, or another device, so that a series of operation steps are performed on the computer, the another programmable data processing apparatus, or the another device to produce a computer-implemented process. Therefore, the instructions executed on the computer, the another programmable data processing apparatus, or the another device implements functions/actions specified in one or more blocks in the flowcharts and/or the block diagrams.

The flowcharts and the block diagrams in the accompanying drawings illustrate system architectures, functions, and operations of possible implementations of apparatuses, systems, methods, and computer program products according to a plurality of embodiments of this application. In this regard, each block in the flowcharts or the block diagrams may represent a module, a program segment, or a part of the instructions, where the module, the program segment, or the part of the instructions includes one or more executable instructions for implementing a specified logical function. In some alternative implementations, the functions marked in the blocks may also occur in a sequence different from that marked in the accompanying drawings. For example, two consecutive blocks may actually be executed substantially in parallel, and sometimes may be executed in a reverse order, depending on a function involved.

It should also be noted that each block in the block diagrams and/or the flowcharts and a combination of blocks in the block diagrams and/or the flowcharts may be implemented by hardware (for example, a circuit or an application-specific integrated circuit (Application-Specific Integrated Circuit, ASIC)) that performs a corresponding function or action, or may be implemented by a combination of hardware and software, for example, firmware.

Although the present invention is described with reference to embodiments, in a process of implementing the present invention that claims protection, a person skilled in the art may understand and implement another variation of the disclosed embodiments by viewing the accompanying drawings, the disclosed content, and the appended claims. In the claims, "comprising" (comprising) does not exclude another component or another step, and "a" or "one" does not exclude a case of plurality. A single processor or another unit may implement several functions enumerated in the claims. Some measures are recorded in dependent claims that are different from each other, but this does not mean that these measures cannot be combined to produce a better effect.

Embodiments of this application are described above. The foregoing descriptions are examples, are not exhaustive, and are not limited to the disclosed embodiments. Many modifications and changes are clear to a person of ordinary skill in the art without departing from the scope and spirit of the described embodiments. The selection of terms used in this specification is intended to best explain the principles of the embodiments, practical application, or improvements to technologies in the market, or to enable another person of ordinary skill in the art to understand the embodiments disclosed in this specification.

## Claims

1. A three-dimensional target detection method, comprising:

   obtaining an image and point cloud data from target environment;
   obtaining semantic information of the image, wherein the semantic information comprises category information corresponding to pixels in the image; and
   determining three-dimensional location information of a target in the target environment based on the point cloud data, the images, and the semantic information of the image.

**2.** The method according to claim 1, wherein the determining three-dimensional location information of a target in the target environment based on the point cloud data, the image, and the semantic information of the image comprises:

projecting the image and the semantic information of the image into the point cloud data, to generate semantic point cloud data;
extracting feature information of the semantic point cloud data, to generate semantic point cloud feature information; and
determining the three-dimensional location information of the target in the semantic point cloud data based on the semantic point cloud feature information.

**3.** The method according to claim 2, wherein the semantic point cloud feature information is output by using a semantic point cloud feature recognition network, and the three-dimensional location information is output by using a target detection network.

**4.** The method according to claim 3, wherein the semantic point cloud feature recognition network comprises a point cloud feature recognition subnetwork and an image feature recognition subnetwork;

the point cloud feature recognition subnetwork is used to extract point cloud feature information of the point cloud data; and
the image feature recognition subnetwork is used to extract image feature information of the images based on the image and the semantic information, and dynamically adjust a network parameter of the point cloud feature recognition subnetwork based on the image feature information.

**5.** The method according to claim 4, wherein the point cloud feature recognition subnetwork comprises at least one network layer, and the image feature recognition subnetwork is separately connected to the at least one network layer; and
the image feature recognition subnetwork is used to extract the image feature information of the image based on the image and the semantic information, and separately and dynamically adjust a network parameter of the at least one network layer based on the image feature information.

**6.** The method according to claim 4 or 5, wherein the network parameter comprises a convolution kernel parameter and/or an attention mechanism parameter, and the attention mechanism parameter is used to use information that is in the image feature information and whose correlation with the point cloud data is greater than a correlation threshold as valid information for adjusting the point cloud feature recognition subnetwork.

**7.** The method according to claim 5 or 6, further comprising:

separately obtaining output data of the at least one network layer; and
determining, based on the output data, adjustment effect data corresponding to the network parameter.

**8.** The method according to any one of claims 1 to 7, wherein the semantic point cloud feature recognition network and the target detection network are obtained through training in the following manner:

obtaining a plurality of semantic point cloud training samples, wherein the semantic point cloud training samples comprise a point cloud data sample, an image sample projected to the point cloud data sample, and the semantic information of the image sample, and the three-dimensional location information of the target is labeled in the semantic point cloud training sample;
constructing the semantic point cloud feature recognition network and the target detection network, wherein an output end of the semantic point cloud feature recognition network is connected to an input end of the target detection network;
separately inputting the plurality of semantic point cloud training samples to the semantic point cloud feature recognition network, and outputting a prediction result by using the target detection network; and
performing iterative adjustment on network parameters of the semantic point cloud feature recognition network and the target detection network based on a difference between the prediction result and the labeled three-dimensional location information of the target, until iteration meets a preset requirement.

**9.** The method according to any one of claims 1 to 8, wherein the obtaining semantic information from the image comprises:

performing panoramic segmentation on the images, to generate the semantic information of the images, wherein the semantic information comprises a panoramic segmentation image of the images, and the panoramic segmentation image comprises image regions, obtained through panoramic segmentation, of different objects and category information corresponding to the image regions.

10. The method according to any one of claims 1 to 9, wherein the image comprises a panoramic image.

11. A three-dimensional target detection apparatus, comprising:

a communication module, configured to obtain an image and point cloud data of a target environment;
a semantic extraction module, configured to obtain semantic information of the image, wherein the semantic information comprises category information corresponding to pixels in the image; and
a target detection module, configured to determine three-dimensional location information of a target in the target environment based on the point cloud data, the image, and the semantic information of the image.

12. The apparatus according to claim 11, wherein the target detection module is specifically configured to:

project the image and the semantic information of the image to the point cloud data, to generate semantic point cloud data;
extract feature information of the semantic point cloud data, to generate semantic point cloud feature information; and
determine the three-dimensional location information of the target in the semantic point cloud data based on the semantic point cloud feature information.

13. The apparatus according to claim 12, wherein the semantic point cloud feature information is output by using a semantic point cloud feature recognition network, and the three-dimensional location information is output by using a target detection network.

14. The apparatus according to claim 13, wherein the semantic point cloud feature recognition network comprises a point cloud feature recognition subnetwork and an image feature recognition subnetwork;

the point cloud feature recognition subnetwork is used to extract point cloud feature information of the point cloud data; and
the image feature recognition subnetwork is used to extract image feature information of the image based on the image and the semantic information, and dynamically adjust a network parameter of the point cloud feature recognition subnetwork based on the image feature information.

15. The apparatus according to claim 14, wherein the point cloud feature recognition subnetwork comprises at least one network layer, and the image feature recognition subnetwork is separately connected to the at least one network layer; and
the image feature recognition subnetwork is specifically used to extract the image feature information of the image based on the image and the semantic information, and separately and dynamically adjust a network parameter of the at least one network layer based on the image feature information.

16. The apparatus according to claim 14 or 15, wherein the network parameter comprises a convolution kernel parameter and/or an attention mechanism parameter, and the attention mechanism parameter is used to use information that is in the image feature information and whose correlation with the point cloud data is greater than a correlation threshold as valid information for adjusting the point cloud feature recognition subnetwork.

17. The apparatus according to claim 15 or 16, further comprising:

an output module, configured to separately obtain output data of the at least one network layer; and
an effect determining module, configured to determine, based on the output data, adjustment effect data corresponding to the network parameter.

18. The apparatus according to any one of claims 11 to 17, wherein the semantic point cloud feature recognition network and the target detection network are obtained through training in the following manner:

obtaining a plurality of semantic point cloud training samples, wherein the semantic point cloud training samples comprise a point cloud data sample, an image sample projected to the point cloud data sample, and the semantic information of the image sample, and the three-dimensional location information of the target is labeled in the semantic point cloud training sample;

constructing the semantic point cloud feature recognition network and the target detection network, wherein an output end of the semantic point cloud feature recognition network is connected to an input end of the target detection network;

separately inputting the plurality of semantic point cloud training samples to the semantic point cloud feature recognition network, and outputting a prediction result by using the target detection network; and

performing iterative adjustment on network parameters of the semantic point cloud feature recognition network and the target detection network based on a difference between the prediction result and the labeled three-dimensional location information of the target, until iteration meets a preset requirement.

19. The apparatus according to any one of claims 11 to 18, wherein the semantic extraction module is specifically configured to:

perform panoramic segmentation on the image, to generate the semantic information of the image, wherein the semantic information comprises a panoramic segmentation image of the image, and the panoramic segmentation image comprises image regions, obtained through panoramic segmentation, of different objects and category information corresponding to the image regions.

20. The apparatus according to any one of claims 11 to 19, wherein the image comprises a panoramic image.

21. A device, comprising the three-dimensional target detection apparatus according to any one of claims 11 to 19.

22. The device according to claim 21, wherein the device comprises one of a vehicle, a robot, a mechanical arm, and a virtual reality device.

23. A three-dimensional target detection apparatus, comprising:

at least one processor; and
at least one memory, configured to store instructions executed by the processor, wherein
the processor is configured to execute the instructions, to perform the method according to any one of claims 1 to 10.

24. Anon-volatile computer-readable storage medium, storing computer program instructions, wherein when the computer program instructions are executed by a processor, the method according to any one of claims 1 to 10 is implemented.

25. A computer program product, comprising computer-readable code, or non-volatile computer-readable storage medium carrying computer-readable code, wherein when the computer-readable code is run on a processor of an electronic device, the processor of the electronic device performs the method according to any one of claims 1 to 10.

FIG. 1

FIG. 2

Obtain an image and point cloud data of a target environment ⎦⎱ S301

Obtain semantic information of the image, where the semantic information includes category information corresponding to pixels in the image ⎦⎱ S303

Determine three-dimensional location information of a target in the target environment based on the point cloud data, the image, and the semantic information of the image ⎦⎱ S305

FIG. 3

FIG. 4A

A plurality of pieces of
semantic information

Panoramic
segmentation
network

360-degree surround-view
semantic point cloud

Coordinate
transformation

360-degree
surround-view
image

Point cloud data

FIG. 4B

Project an image and semantic information of the image to point cloud data, to generate semantic point cloud data — S501

Extract feature information of the semantic point cloud data, to generate semantic point cloud feature information — S503

Determine three-dimensional location information of a target in the semantic point cloud data based on the semantic point cloud feature information — S505

FIG. 5

Image

Semantic information

Point cloud data

Coordinate transformation

Coordinate transformation

Semantic point cloud data

FIG. 6

Semantic point
cloud data

FIG. 7

Obtain a plurality of semantic point cloud training samples, where the semantic point cloud training samples include a point cloud data sample, an image sample projected to the point cloud data sample, and semantic information of the image sample, and three-dimensional location information of a target is labeled in the semantic point cloud training sample — S801

Construct a semantic point cloud feature recognition network and a target detection network, where an output end of the semantic point cloud feature recognition network is connected to an input end of the target detection network — S803

Separately input the plurality of semantic point cloud training samples to the semantic point cloud feature recognition network, and output a prediction result by using the target detection network — S805

Perform iterative adjustment on network parameters of the semantic point cloud feature recognition network and the target detection network based on a difference between the prediction result and the labeled three-dimensional location information of the target, until iteration meets a preset requirement — S807

FIG. 8

Point cloud data

Image

Semantic information

Feature extraction network
701

Point cloud feature
recognition
subnetwork 901

Parameter
adjustment

Image feature
recognition
subnetwork 903

Target detection
network
703

FIG. 9

FIG. 10

EP 4 307 219 A1

FIG. 11

| INTERNATIONAL SEARCH REPORT | International application No. |
|---|---|
| | **PCT/CN2022/081503** |

**A.    CLASSIFICATION OF SUBJECT MATTER**

G06T 7/00(2017.01)i

According to International Patent Classification (IPC) or to both national classification and IPC

**B.    FIELDS SEARCHED**

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

CNABS; CNTXT; VEN; USTXT; WOTXT; ENTXT; CNKI; CJFD: 三维, 图像, 点云, 语义, 像素, 类别, 分类, 位置, 坐标, 投影, 调整, 动态, 准确, 3D, image, point cloud, semantic, pixel, kind, type, classification, location, coordinate, projection, adjust, dynamic, accuracy

**C.    DOCUMENTS CONSIDERED TO BE RELEVANT**

| Category* | Citation of document, with indication, where appropriate, of the relevant passages | Relevant to claim No. |
|---|---|---|
| PX | CN 114118254 A (TONGJI UNIVERSITY) 01 March 2022 (2022-03-01) description, paragraphs 54-96, and figures 2-4 | 1-25 |
| X | CN 112560774 A (GUANGZHOU WERIDE TECHNOLOGY CO., LTD.) 26 March 2021 (2021-03-26) description, paragraphs 59-209 | 1-25 |
| X | CN 111523547 A (JIANGSU SHENGHAI INTELLIGENT TECHNOLOGY CO., LTD.) 11 August 2020 (2020-08-11) description, paragraphs 21-151 | 1-25 |
| X | CN 110175498 A (GM GLOBAL TECHNOLOGY OPERATIONS LLC) 27 August 2019 (2019-08-27) description, paragraphs 25-53, and figures 1-7 | 1-25 |
| A | US 2021063578 A1 (NVIDIA CORPORATION) 04 March 2021 (2021-03-04) entire document | 1-25 |

☐ Further documents are listed in the continuation of Box C.          ☑ See patent family annex.

| *    Special categories of cited documents: | "T"    later document published after the international filing date or priority date and not in conflict with the application but cited to understand the principle or theory underlying the invention |
|---|---|
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **16 May 2022** | **27 May 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/081503**

| Patent document cited in search report | | | Publication date (day/month/year) | Patent family member(s) | | | Publication date (day/month/year) |
|---|---|---|---|---|---|---|---|
| CN | 114118254 | A | 01 March 2022 | None | | | |
| CN | 112560774 | A | 26 March 2021 | None | | | |
| CN | 111523547 | A | 11 August 2020 | None | | | |
| CN | 110175498 | A | 27 August 2019 | US | 2019258876 | A1 | 22 August 2019 |
| | | | | DE | 102019104217 | A1 | 22 August 2019 |
| | | | | US | 10671860 | B2 | 02 June 2020 |
| US | 2021063578 | A1 | 04 March 2021 | WO | 2021041854 | A1 | 04 March 2021 |

Form PCT/ISA/210 (patent family annex) (January 2015)

**REFERENCES CITED IN THE DESCRIPTION**

**Patent documents cited in the description**

- CN 202110334527